# EUROPÄISCHE PATENTANMELDUNG

(11) **EP 3 747 696 A1**
(43) Veröffentlichungstag der Anmeldung: **09.12.2020**
(21) Anmeldenummer: 20177185.4
(22) Anmeldetag: 28.05.2020
(51) Int. Cl.: B60P 3/34

(54) **WOHNKABINE FÜR FAHRZEUGE**

(30) Priorität: 28.05.2019 DE 102019114215
(71) Anmelder: Weger, Stefanie, 85276 Pfaffenhofen (DE)
(72) Erfinder: Weber, Harald, verstorben (DE)
(74) Vertreter: Liebl, Thomas

(57) **Zusammenfassung**

Die Erfindung betrifft eine Wohnkabine für Fahrzeuge mit verschiebbaren Kastenelementen zur Wohnraumvergrößerung. Erfindungsgemäß sind vier teleskopartig in einer fahrbereiten Geschlossenstellung geschachtelt ineinander geschobene und in eine Offenstellung zur Wohnraumvergrößerung ausschiebbare Kastenelemente vorgesehen, wobei ein erstes Kastenelement als oben und einseitig offenes Unterteil (2) des Wohnraums vorgesehen ist, ein zweites Kastenelement als oben und einseitig nach innen zum Unterteil (2) hin offener Unterteil-Ausschub (4) vorgesehen ist, der in der Geschlossenstellung ausschiebbar in das Unterteil (2) eingeschoben ist, ein drittes Kastenelement als unten und einseitig an der gleichen Seite und einseitig an der gleichen Seite wie das Unterteil (2) offenes, vertikal nach oben in eine Offenstellung verschiebbares Hubdach (5) vorgesehen ist, das in der abgesenkten Geschlossenstellung das Unterteil (2) übergreift, und ein viertes Kastenelement als unten und einseitig nach innen zum Hubdach (5) hin offener Hubdachausschub (6) vorgesehen ist, der aus dem Hubdach (5), den Unterteil-Ausschub (4) überdeckend ausschiebbar ist, wobei der Hubdachausschub (6) in der ins Hubdach (5) eingeschobenen und mit dem Hubdach (5) abgesenkten Geschlossenstellung den Unterteil-Ausschub (4) übergreift.

## Beschreibung

Die Erfindung betrifft einen Wohnkabine für Fahrzeuge nach dem Oberbegriff des Anspruchs 1.

Eine allgemein bekannte, übliche Wohnkabine auf einem Fahrgestell zur Ausbildung eines Wohnanhängers hat ein großes unveränderliches Wohnraumvolumen mit Stehhöhe. Der Aufbau und das Fahrwerk sind für einen Offroad-Betrieb, das heißt für einen Einsatz im Gelände bei unebenen Fahrbedingungen sind meist nur bedingt oder nicht geeignet. Es sind jedoch auch marktübliche Offroad-Wohnanhänger allgemein bekannt mit einem kompakten, niedrigen Aufbau im Fahrbetrieb. Eine bekannte Ausführungsform ist dabei ein einfacher Anhänger, in dem sich ein zusammengefaltetes Zelt befindet, das im Fahrbetrieb oben mit einer Plane abgedeckt ist. Im Wohnbetrieb kann dieses Zelt als Wohnkabine auf dem Anhänger aufgebaut werden mit den Nachteilen einer fehlenden Dämmung und der Feuchteempfindlichkeit des Zeltmaterials. Weiter sind niedrige Ausführungsformen von Wohnkabinen mit einem Hubdach allgemein bekannt, bei denen zur Wohnraumvergrößerung bei im Wesentlichen gleicher Grundfläche das Hubdach angehoben werden kann.

Weiter ist eine Vorrichtung zur Wohnraumvergrößerung bei Wohnmobilen oder Wohnanhängern bekannt, bei der zu beiden Seiten quaderförmige Kastenelemente im Fahrbetrieb in den Wohnraumbereich eingeschoben sind und im Wohnbetrieb zur Wohnraumvergrößerung seitlich ausschiebbar sind (US 7,717,485 B1). Der Aufbau des Wohnraums ist hier entsprechend einer Stehhöhe unveränderlich hoch, wobei auch die Kastenelemente mit entsprechender Stehhöhe hoch sind. Ein so hoher Aufbau ist insbesondere für einen Offroadeinsatz nicht geeignet.

Aufgabe der Erfindung ist es demgegenüber, eine Wohnkabine zu schaffen, die für den Fahrbetrieb, insbesondere für einen Offroad-Einsatz eine relativ kleine Grundfläche und relativ kleine Höhe aufweist und dessen Wohnraum durch Vergrößerung der Grundfläche und der Wohnraumhöhe insgesamt für einen Wohnbetrieb vergrößert werden kann.

Diese Aufgabe wird dadurch gelöst, dass vier teleskopartig in einer fahrbereiten Geschlossenstellung geschachtelt ineinander geschobene und in eine Offenstellung zur Wohnraumvergrößerung ausschiebbare Kastenelemente vorgesehen sind. Ein erstes Kastenelement ist dabei als oben und einseitig offenes Unterteil des Wohnraums vorgesehen.

Ein zweites Kastenelement ist als oben und einseitig zum ersten Kastenelement hin offener Unterteil-Ausschub vorgesehen, der in der Geschlossenstellung ausschiebbar in das Unterteil eingeschoben ist.

Ein drittes Kastenelement ist als unten und einseitig an der gleichen Seite wie das Unterteil offenes, vertikal nach oben in eine Offenstellung verschiebbares Hubdach vorgesehen, das in der abgesenkten Geschlossenstellung das Unterteil übergreift.

Ein viertes Kastenelement ist als unten und einseitig zum dritten Kastenelement hin offener Hubdachausschub vorgesehen, der aus dem Hubdach, den Unterteil-Ausschub überdeckend ausschiebbar ist und der in der ins Hubdach eingeschobenen und mit dem Hubdach abgesenkten Geschlossenstellung den Unterteil-Ausschub übergreift.

Mit dem erfindungsgemäßen Wohnanhängeraufbau und der Anordnung der vier quaderförmig und teleskopartig im Fahrbetrieb geschachtelt ineinander geschobenen und für einen Wohnbetrieb ausgeschobenen Kastenelement kann eine Wohnkabine mit vergrößerbarer Wohnraumgrundfläche und vergrößerbarer Wohnraumhöhe zur Verfügung gestellt werden, wobei die Kastenelemente dabei einfach und kostengünstig vorzugsweise als glasfaserverstärkte Kunststoffelemente in Leichtbauweise hergestellt werden können und die Funktion des Aus- und Einschiebens der Kastenelemente einfach durchführbar ist.

Das Unterteil der Wohnkabine kann zur Ausbildung eines insbesondere offroadtauglichen Wohnanhängers auf ein Fahrgestell montiert sein, welches einen stabilen Rahmen, sowie seitliche Räder aufweist und mit einer Deichsel mit Anhängekupplung ausgerüstet ist.

Die Wohnkabine kann alternativ auch auf der Ladefläche eines Pickup-Fahrzeugs, insbesondere eines offroadtauglichen Fahrzeugs angeordnet, vorzugsweise lösbar montiert sein.

Im konkreten Aufbau weist das Unterteil als erstes Kastenelement eine Unterteil-Bodenwand, eine Unterteil-Frontwand, eine Unterteil-Heckwand und eine Unterteil-Seitenwand auf. Die Unterteil-Frontwand, die Unterteil-Heckwand und die Unterteil-Seitenwand sind dabei bevorzugt relativ niedrig mit einer Höhe, die etwa der Hälfte einer Stehhöhe entspricht.

Der Unterteilausschub als zweites Kastenelement weist eine Unterteilausschub-Bodenwand, eine Unterteilausschub-Frontwand, eine Unterteilausschub-Heckwand und eine Unterteilausschub-Seitenwand auf. Dabei sind die Quererstreckungen der Unterteilausschub-Frontwand und der Unterteilausschub-Heckwand größer als sie Ausschubstrecke bis zu einer vorgegebenen Ausschubposition. Zudem liegen diese Wände innerhalb und parallel zu zugeordneten Wandbereichen des Unterteils und sind an denen entlang verschiebbar. Damit nützt die Unterteilausschublänge die gesamte Unterteillänge zur Bodenflächenvergrößerung aus, wobei in der maximalen Ausschubposition der Unterteilausschub in Ausschubrichtung noch mit einem Randbereich im Unterteil verbleibt und dort gehalten ist.

Das Hubdach weist als drittes Kastenelement eine Hubdach-Deckenwand, eine Hubdach-Frontwand, eine Hubdach-Heckwand und eine Hubdach-Seitenwand auf. Die Hubdach-Frontwand, die Hubdach-Heckwand und die Hubdach-Seitenwand übergreifen in einer abgesenkten Tiefposition des Hubdachs die zugeordneten Unterteilwände und decken diese flächig ab. In einer angehobenen Hochposition werden die Unterteilwände zumindest teilweise mit einem unteren Randbereich der Hubdach-Frontwand und/oder der Hubdach-Heckwand und/oder der Hubdach-Seitenwand übergriffen.

Der Hubdachausschub als viertes Kastenelement weist eine Hubdachausschub-Deckenwand, eine Hubdachausschub-Frontwand, eine Hubdachausschub-Heckwand und eine Hubdachausschub-Seitenwand auf. Dabei werden in einer abgesenkten Tiefposition des Hubdachs die zugeordneten Unterteilausschubwände flächig von der Hubdachausschub-Frontwand, der Hubdachausschub-Heckwand und der Hubdachausschub-Seitenwand übergriffen und abgedeckt. In einer angehobenen Hochposition des Hubdachs bei ausgeschobenem Hubdachausschub werden zugeordnete Unterteilausschubwände zumindest teilweise mit einem unteren Hubdachausschub-Rand übergriffen. In einer abgesenkten Tiefposition des Hubdachs und einem eingeschobenen Unterteilausschub und einem eingeschobenen Hubdachausschub liegen somit im Frontbereich und Heckbereich vier Wandteile und in den Seitenbereichen sowie im Boden- und Deckenbereich jeweils zwei Wandteile übereinander.

Für einen kompakten, möglichst niedrigen Aufbau des Wohnanhängers wird durch entsprechende Dimensionierung der Kastenelemente die maximal mögliche Wohnraumhöhe im eingeschobenen Zustand der Kastenelemente etwa halbiert.

Grundsätzlich können der Unterteilausschub und der Hubdachausschub rechts oder links an der Wohnkabine angeordnet sein. Zweckmäßig werden die Ausschübe jedoch beispielsweise ein einem Wohnanhängeraufbau so angebracht, dass ein zu den Ausschüben gegenüberliegender Türausstieg bei einem parkenden Wohnanhänger zu einer Gehsteigseite hin öffnet, wobei in Ländern mit Rechtsverkehr die Gehsteigseite üblicherweise rechts liegt.

Zur Begehung des Wohnraums bei hochgestelltem Hubdach wird eine zweiteilige Tür vorgeschlagen, wobei bevorzugt eine untere Tür oder eine nach unten aufschwenkbare Klappe in der Unterteil-Seitenwand und darüber in der Hubdach-Seitenwand eine obere Tür oder eine nach oben schwenkbare Klappe vorgeschlagen wird.

Zur Wohnraumausleuchtung wird weiter vorgeschlagen, dass zumindest in der Hubdach-Seitenwand und/oder in der Hubdachausschub-Seitenwand wenigstens ein Fenster angeordnet ist. Weitere Fenster können auch noch an weiteren Wänden des Hubdachs und des Hubdachausschubs bei Bedarf angeordnet werden.

Zur Realisierung stabil und genau geführter Hub- und Ausschubbewegungen der Kastenelemente sowie deren Rückbewegungen sind an den Kastenelementen Führungselemente angeordnet. Zudem können in einer vorteilhaften Weiterbildung zwischen den Kastenelementen bewegungsübertragende Vorrichtungen als motorisch und/oder von Hand betätigbare Stelleinheiten und/oder bewegungsübertragende Mitnehmer für untereinander gekoppelte Bewegungen angeordnet sein, beispielsweise bewegungsübertragende Seilzüge oder Ketten in Verbindung mit betätigbaren Rasten.

Für eine geführte Bewegung des Hubdachs weist das Unterteil bevorzugt ein Rahmengestell auf, in dessen Eckbereichen Vertikal-Führungselemente vorzugsweise Vertikalführungsschienen vorgesehen sind. Am Hubdach sind in dessen unteren Eckbereichen Gegen-Führungselemente, vorzugsweise Rollenelemente angeordnet. In den Eckbereichen sind steuerbare Linear-Hubelemente, vorzugsweise Linear-Hubzylinder angeordnet. Damit kann das relativ schwere Hubdach mit seinem Hubdachausschub bequem und exakt geführt je nach Ausführungsform der Linear-Hubelemente elektrisch und/oder hydraulisch und/oder pneumatisch gesteuert angehoben oder abgesenkt werden.

Für eine geführt und in Hoch- und Längsrichtung abgestützte Ausschubbewegung des Unterteilausschubs sind Führungselemente vorgesehen, wobei vorzugsweise sowohl im heckseitigen als auch im frontseitigen Unterteil-Bodenbereich jeweils ein teleskopierbares Unterteil-Schienenpaar angebracht ist. Jedes der Unterteil-Schienenpaare besteht aus einer Unterteilfestschiene, die als Profilschiene jeweils fest mit der Unterteil-Bodenwand verbunden ist und aus einer Unterteil-Schubschiene, die in der zugeordneten Unterteil-Festschiene in Ausschubbrichtung bis zu einer Ausschubbegrenzung verschiebbar ist. Die Unterteil-Schubschiene kann jeweils mit einem zugeordneten unteren äußeren Heckbereich des Unterteilausschubs verbunden sein. Gegebenenfalls kann der Unterteilausschub in seiner ausgeschobenen Position zur Stabilisierung insbesondere gegen Querkippungen außen mit wenigstens einer an sich bekannten, an Anhängern üblichen Stütze zum Boden hin abgestützt werden.

Für eine geführte und in Hoch- und Längsrichtung abgestützte Ausschubbewegung des Hubdachausschubs sind weitere Führungselemente vorgesehen, wobei vorzugsweise sowohl innen im heckseitigen als auch im frontseitigen Hubdach-Deckenbereich jeweils eine Ausschub-Führungsschiene als Profilschiene angeordnet ist. Im Profil der beiden Ausschub-Führungsschienen ist je ein Rollwagenelement mit wenigstens zwei in Querrichtung versetzten Rollen verschiebbar gehalten, wobei je eines dieser Rollwagenelemente mit dem Hubdachausschub an dessen jeweiligem oberen innen Eckbereich verbunden ist. Weiter können zur entlastenden Abstützung des Hubdachausschubs nach unten und für eine Zentrierung des Hubdachausschubs zum Unterteilausschub jeweils im heckseitigen und frontseitigen unteren, äußeren Eckbereich Rollenpaare mit Achsen in Querrichtung und mit Achsen in Längsrichtung angeordnet sein, die sich an oberen Querrandbereichen des Unterteilausschubs abstützen und dort abrollen.

Im Folgenden werden vorteilhafte und zweckmäßige Anordnungen von Einbauelementen im Wohnbereich angegeben. Einbauten erfolgen dabei vorteilhaft nur an der feststehenden und unverschiebbaren Seitenwand des Unterteils sowie an der ausfahrbaren Seitenwand des Unterteilausschubs.

Dabei soll an der Innenseite der nicht verschiebbaren Unterteil-Seitenwand, gegebenenfalls neben einem Türbereich eine Küchenzeile mit einer Spüle und/oder mit einem Herd und/oder mit einer Geschirrablage etc. angeordnet sein. Dabei können vorteilhaft Installationsteile, wie Kabel oder Rohre lagefest an der Unterteilseitenwand verlegt werden. Dazu gegenüberliegend ist im ausschiebbaren Unterteilausschub ein Schubladensystem mit in Querrichtung nach innen ausziehbaren Schubladenelementen angeordnet, wobei die Schubladensystem-Rückwand die Unterteilausschub-Seitenwand bildet.

Eine gute Wohnraumausnutzung in Verbindung mit dem Schubladensystem wird dadurch erreicht, dass in dessen mittlerem, oberen Bereich ein Tischplattenausschub und beidseitig daneben, tieferliegende Sitzausschübe für eine Sitzgruppe vorgesehen sind. In gleicher Höhe der Sitzausschübe ist dazwischenliegend ein Bettausschub angeordnet, wobei bei einem eingeschobenen Tischplattenausschub die ausgeschobenen Sitzausschübe und der ausgeschobene Bettausschub mit Polsterauflagen eine Liegefläche als Bett bilden.

Weiter kann auf einer oberen Abdeckwand des Schubladensystems mit einer Polsterauflage eine Liegefläche für ein bis zwei Personen ausgebildet sein.

Zudem kann zumindest ein Teilbereich der Unterteilausschub-Seitenwand als aufklappbare Seitenwandklappe ausgebildet sein, dergestalt dass Schubelemente des Schubladensystems bei angehobenem Hubdach und offener Seitenwandklappe auch nach außen ausziehbar sind und beispielsweise Schubladen bequem von außen beladen werden können.

In einer vorteilhaften Dimensionierung weist der Unterteilausschub mit seiner Unterteilausschub-Bodenwand, seiner Unterteilausschub-Frontwand und seiner Unterteilschub-Heckwand eine Breite im eingeschobenen Zustand auf, die sich bis zur Frontseite der unverschiebbaren Küchenzeile erstreckt. Mit anderen Worten ist der Unterteilausschub und entsprechend der zugeordnete Hubdachausschub so breit wie der Unterteil abzüglich der Tiefe (in Querrichtung des Wohnbereichs) der Küchenzeile. Damit ist bei fest eingebauter Küchenzeile eine maximale Vergrößerung des Wohnraums durch die Ausschübe möglich.

Anhand einer Zeichnung werden beispielhaft konkrete Ausführungsformen der Erfindung dargestellt.

Es zeigen:
- Figur 1: eine erfindungsgemäße Wohnkabine auf einem Fahrgestell zur Ausbildung eines Wohnanhängers in einer perspektivischen rechtsseitigen Ansicht im zusammengeschobenen Zustand für einen Fahrbetrieb,
- Figur 2: eine der Figur 1 entsprechende linksseitige Ansicht,
- Figur 3: eine der Figur 1 entsprechende Ansicht mit einem in seine Offenstellung angehobenen Hubdach,
- Figur 4: eine linksseitige Ansicht entsprechend Figur 3,
- Figur 5: eine Ansicht entsprechend Figur 1 mit angehobenem Hubdach und einem ausgeschobenen Unterteilausschub und einem ausgeschobenen Hubdachausschub für einen Wohnbetrieb,
- Figur 6: eine linksseitige Ansicht entsprechend Figur 5
- Figur 7: eine Anordnung von Führungselementen in einer schematisch strichliert dargestellten Wohnkabine des Wohnanhängers im eingeschobenen, fahrbereiten Zustand;
- Figur 8: eine Darstellung entsprechend Figur 7 im angehobenen Zustand des Hubdachs und bei ausgefahrenem Unterteilausschub und ausgefahrenem Hubdachausschub,
- Figur 9: einen Schnitt durch ein teleskopierbares Unterteil-Schienenpaar für den Unterteilausschub,
- Figur 10: eine Rollenanordnung zur Abstützung des Unterteilausschubs,
- Figur 11 und 12: Führungselemente für das Hubdach,
- Figur 13: ein Führungselement für den Hubdachausschub,
- Figur 14: eine perspektivische Ansicht von Innen auf ein Schubladensystem im Unterteilausschub bei eingeschobenen Schubladen,
- Figur 15: eine Ansicht entsprechend Figur 14 bei ausgezogenen Schubladen,
- Figur 16: eine Ansicht entsprechend Figur 14 mit herausgezogenem Tischauszug und mit ausgeschobenen Sitzausschüben für eine Sitzgruppe,
- Figur 17: eine Ansicht entsprechend Figur 14 mit ausgeschobenen Sitzausschüben und ausgeschobenem Bettausschub für eine Liegefläche, und
- Figur 18: eine Ansicht einer Ausführungsform mit einer geöffneten Seitenwandklappe und teilweise nach außen herausgezogenen Schubladen.

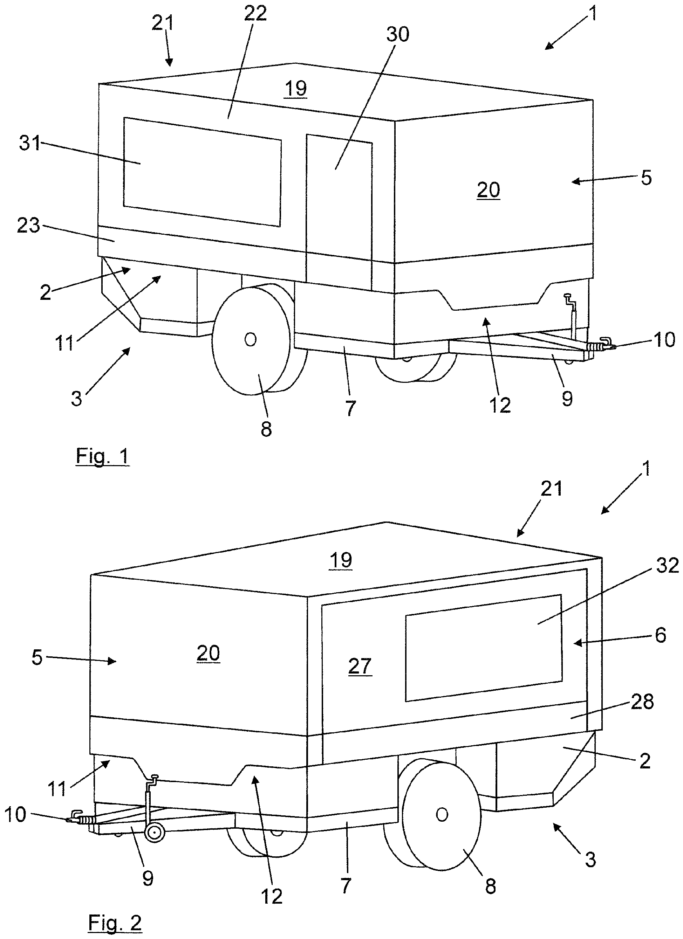

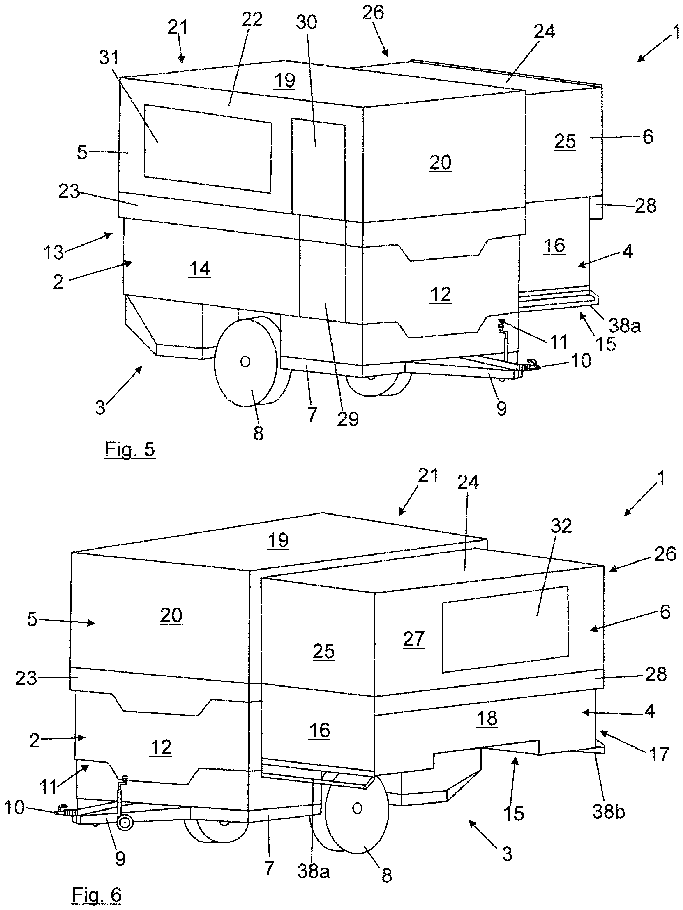

In den Figuren 1 bis 6 ist ein Wohnanhänger 1 mit einer erfindungsgemäßen Wohnkabine mit verschiebbaren Kastenelementen zur Wohnraumvergrößerung in unterschiedlichen Ansichten und Zuständen dargestellt. Konkret sind vier quaderförmige, teleskopartig in einer fahrbereiten Geschlossenstellung (Figur 1 und Figur 2) ineinander geschobene und in eine Offenstellung (Figur 5 und Figur 6) zur Wohnraumvergrößerung ausgeschobene Kastenelemente vorgesehen.

Dabei ist ein erstes Kastenelement als oben und einseitig offenes Unterteil 2 des Wohnraums auf einem Fahrgestell 3 montiert.

Ein zweites Kastenelement als oben und einseitig zum ersten Kastenelement hin offener Unterteilausschub 4 ist in einer Geschlossenstellung in das Unterteil 2 eingeschoben (Figuren 1 und 2) und in eine Offenstellung ausschiebbar (Figuren 5 und 6).

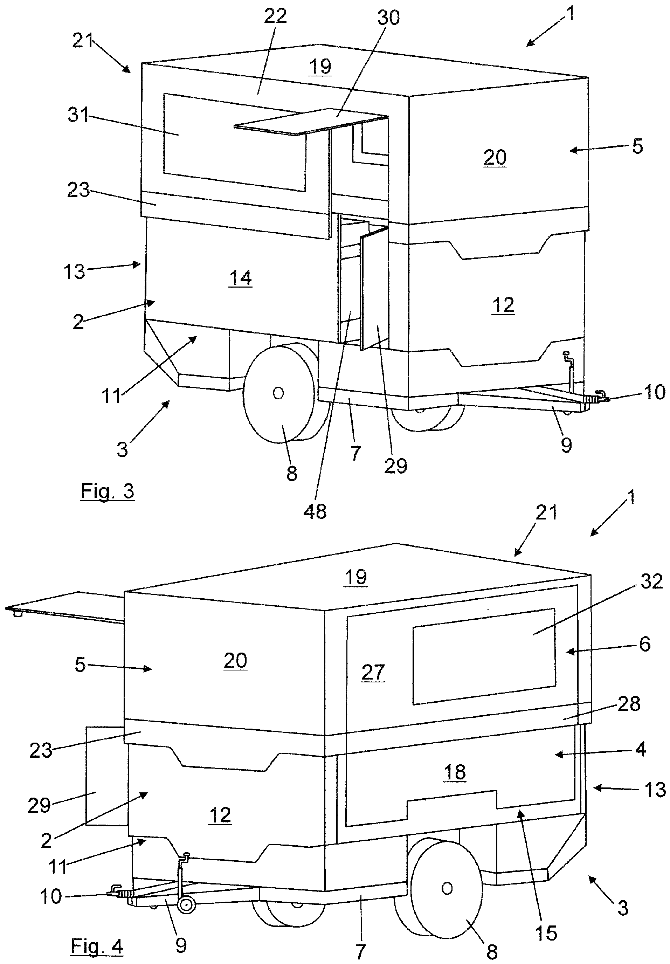

Ein drittes Kastenelement als unten und einseitig an der gleichen Seite wie das Unterteil 2 offenes, vertikal nach oben in eine Offenstellung (Figuren 3 bis 6) verschiebbares Hubdach 5 übergreift in der abgesenkten Geschlossenstellung das Unterteil 2 (Figuren 1 und 2).

Ein viertes Kastenelementes als unten und einseitig zum Hubdach 5 hin offener Hubdachausschub 6 ist aus dem Hubdach 5 einen Unterteilausschub 4 überdeckend seitlich ausschiebbar (Figuren 5 und 6), wobei der Hubdachausschub 6 in der eingeschobenen und mit dem Hubdach 5 abgesenkten Geschlossenstellung den Unterteilausschub 4 übergreift (Figuren 1 und 2). Das Fahrgestell 3 weist einen Rahmen 7, eine Achse mit Rädern 8 und eine Deichsel 9 mit Anhängekupplung 10 auf.

Das quaderförmige Unterteil 2 als erstes Kastenelement weist eine mit dem Fahrgestell 3 verbundene Unterteil-Bodenwand 11, eine Unterteil-Frontwand 12, eine Unterteil-Heckwand 13 und eine in Fahrtrichtung gesehen rechtsseitige Unterteil-Seitenwand 14 auf, wobei die gegenüberliegende Seitenwand ist für den Unterteilausschub 4 offen. Die Wände des Unterteils 2 sind gleich hoch mit einer Höhe entsprechend etwa der Hälfte einer üblichen Stehhöhe.

Der Unterteilausschub 4 als zweites Kastenelement weist eine Unterteilausschub-Bodenwand 15, eine Unterteilausschub-Frontwand 16, eine Unterteilausschub-Heckwand 17 und eine Unterteilausschub-Seitenwand 18 auf, wobei die gegenüberliegende Seitenwand zur Innenseite hin offen ist. Die Quererstreckung des Unterteilausschubs 4 ist etwas größer als sie Ausschubstrecke bis zu einer vorgegebenen begrenzten Ausschubposition, so dass der Unterteilausschub 4 auch in seiner maximalen Ausschubstellung im Unterteil 2 mit einem Randbereich gehalten ist. Die Unterteilausschub-Frontwand 16 und die Unterteilausschub-Heckwand 17 liegen innerhalb und parallel verschiebbar zu zugeordneten Wandbereichen des Unterteils 1.

Das Hubdach 5 als drittes Kastenelement weist eine Hubdach-Deckwand 19, eine Hubdach-Frontwand 20, eine Hubdach-Heckwand 21 und eine Hubdach-Seitenwand 22 auf, wobei die Front-, Heck- und Seitenwand 20, 21, 22 in einer abgesenkten Tiefposition des Hubdachs 5 die zugeordneten Unterteilwände flächig übergreifen und abdecken (Figuren 1 und 2) und diese in einer angehobenen Hochposition mit einem unteren Randbereich 23 übergreifen.

Der Hubdachausschub 6 als viertes Kastenelement weist eine Hubdachausschub-Deckenwand 24, eine Hubdachausschub-Frontwand 25, eine Hubdachausschub-Heckwand 26 und eine Hubdachausschub-Seitenwand 27 auf. Die Hubdachausschub-Frontwand 25, die Hubdachausschub-Heckwand 28 und die Hubdachausschub-Seitenwand 27 übergreifen flächig abdeckend die zugeordneten Unterteilausschubwände 16, 17, 18, wobei in dieser Position der Unterteilausschub 4 insgesamt im Hubdachausschub 6 einliegt. In einer angehobenen Hochposition des Hubdachs 5 werden diese Unterteilausschubwände 16, 17, 18 mit einem unteren Hubdachausschubrand 28 übergriffen und von oben her randseitig abgedeckt. Damit liegen in einer abgesenkten Tiefposition des Hubdachs 5 mit eingeschobenem Unterteilausschub 4 und eingeschobenen Hubdachausschub 6 im Frontbereich und Heckbereich jeweils flächenparallel vier Wandteile und in den Seitenbereich sowie im Boden- und Deckenbereich jeweils zwei Wandteile übereinander. Wegen der Überdeckungen ist der Unterteilausschub 4 ersichtlich nach oder zusammen mit dem Hubdachausschub auszuschieben.

Die Höhe des Hubdachs 5 entspricht etwa der Höhe des Unterteils 2, so dass im angehobenen Zustand des Hubdachs 2 im Wohnbereich eine Stehhöhe zur Verfügung steht.

An der hier an der linken Seite angeordneten, unverschiebbar lagefesten Unterteil-Seitenwand 14 ist in einem hier vorderen Bereich eine untere Tür 29 angeordnet und darüber in der zugeordneten Hubdach-Seitenwand als obere Türergänzung eine nach oben aufschwenkbare Klappe 30 angeordnet, wie dies insbesondere aus den Figuren 3 und 5 ersichtlich ist. Damit ist insgesamt eine Tür in Stehhöhe realisiert. Die untere Tür 29 wird im abgesenkten Zustand des Hubdachs von der Klappe 30 abgedeckt (Figur 1).

In der Hubdach-Seitenwand 23 im Bereich neben der Klappe 30 und in der Hubdachausschub-Seitenwand 27 sind große Fenster 31, 32 angebracht.

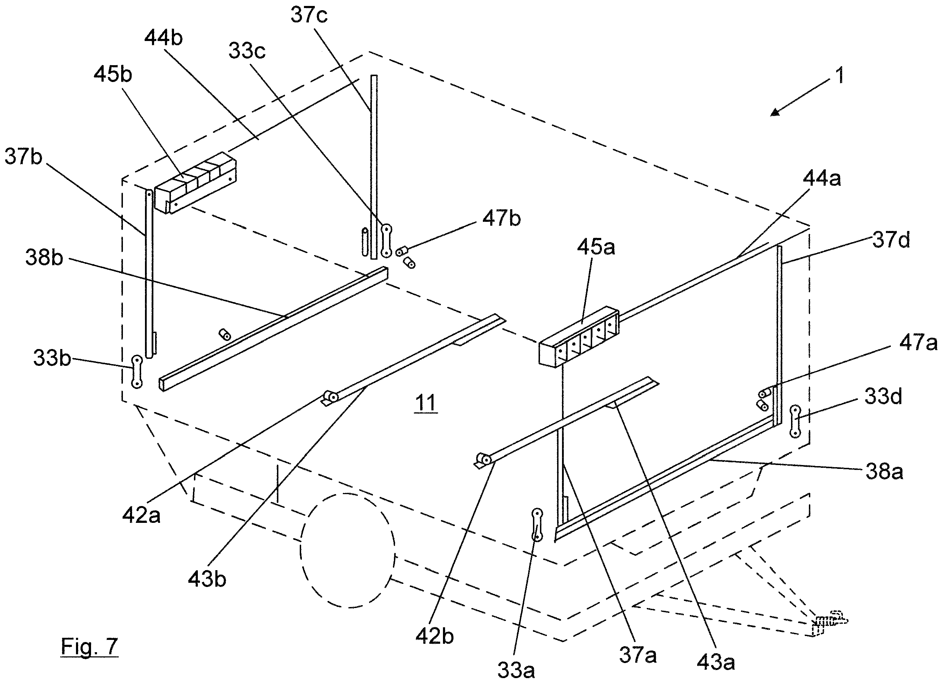

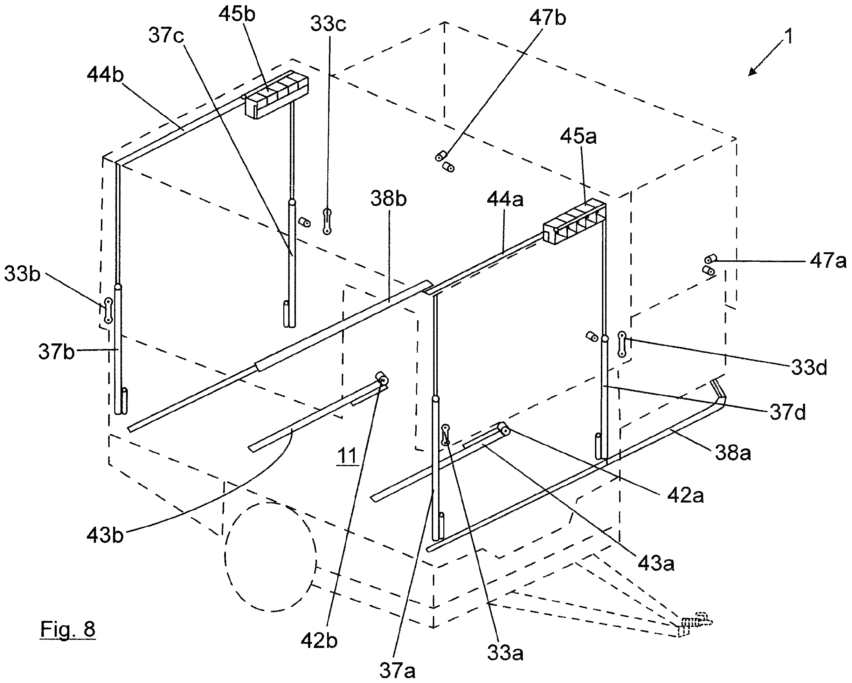

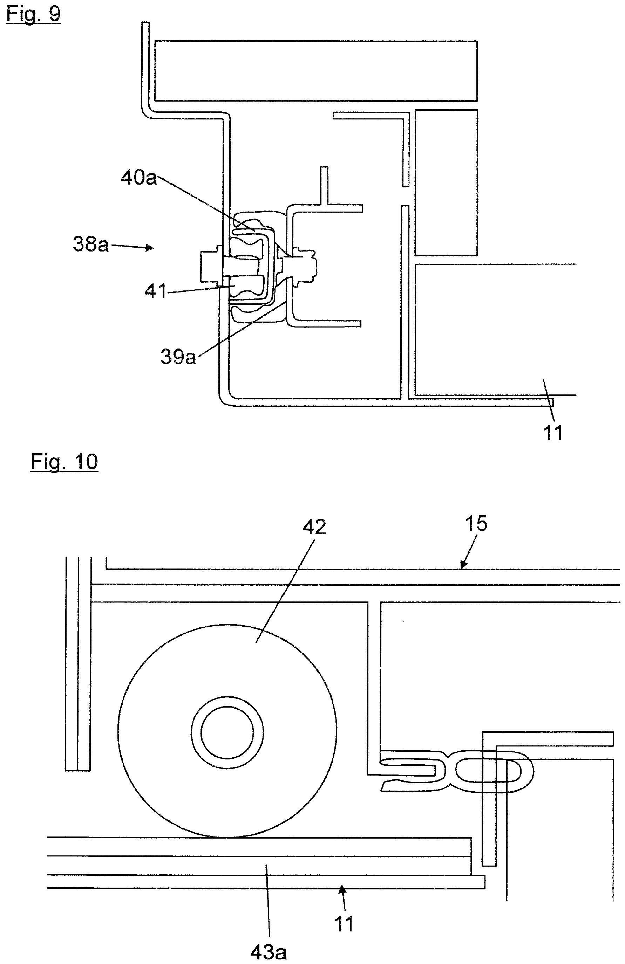

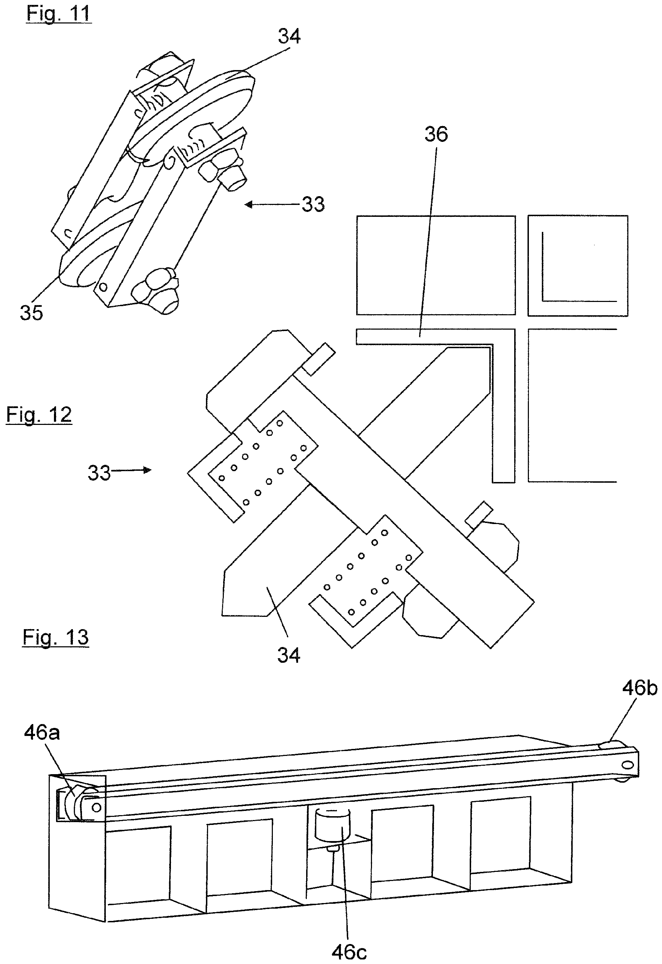

Für ein geführtes, bequemes Anheben des Hubdachs 5 weist das Unterteil 2 ein Rahmengestell auf, in dessen Eckbereichen vier Vertikalführungsschienen (in den Figuren 7 und 8 nicht im Detail dargestellt) vorgesehen sind. Am Hubdach 5 sind in dessen unteren vier Eckbereichen Rollenelemente 33 mit wenigstens zwei in Vertikalrichtung versetzten Rollen 34, 35 angeordnet. Die Rollen 34, 35 rollen bei einer Höhenverstellung des Hubdachs 5 in einem Profil der jeweils zugeordneten Vertikal-Führungsschiene mit einer Abstützung in Längs- und Querrichtung ab. Eines dieser Rollenelemente 33 ist perspektivisch in Figur 11 und in einer Schnittdarstellung in Figur 12 mit den Rollen 34, 35 dargestellt. Ersichtlich rollen dabei die Rollen 34, 35 schräg in einem Winkelprofil der Vertikal-Führungsschiene 36 abgestützt in Längs- und Querrichtung. Zudem ist für eine kraftsparende Hub- und Absenkbewegung des Hubdachs 5 zwischen einer Unterteil-Bodenwand 11 bzw. einem Unterteil-Bodenrahmen und einer Hubdach-Deckenwand 19 bzw. dortigen Rahmenteilen in den vier Eckbereich je ein elektrisch und/oder hydraulisch steuerbar angetriebener Linear-Hubzylinder 37a,b,c,d angeordnet. Für eine geführte und in Hoch- und Längsrichtung abgestützte Ausschubbewegung des Unterteilausschubs 4 ist sowohl im heckseitigen als auch im frontseitigen Bereich der Unterteil-Bodenwand 11 jeweils ein teleskopierbares Unterteilschienenpaar 38a, 38b angeordnet. Wie aus der Schnittdarstellung nach Figur 9 ersichtlich, besteht jedes Unterteilschienenpaar 38a, 38b jeweils aus einer Unterteil-Festschiene 39a, 39b und einer Unterteil-Schubschiene 40a, 40b, die mittels Rollen 41 in der zugeordneten Unterteil-Festschiene 39a, 39b in Ausschubrichtung bis zu einer Ausschubbegrenzung verschiebbar ist. Die Schubschienen 40a, 40b sind jeweils mit einem zugeordneten unteren äußeren Eckbereich des Unterteilausschubs 4 fest verbunden.

Für eine weitere entlastende Abstützung des Unterteilausschubs 4 können gegebenenfalls unter der Unterteilausschub-Bodenwand 15 mit dieser verbundene und nach unten weisende Rollen 42 angebracht sein, die auf Querschienen, hier auf zwei in Längsrichtung beabstandete Querschienen 43a, 43b auf der Unterteil-Bodenwand 11, beim Aus- und Einschub abrollen, wie dies in einer Schnittdarstellung in Figur 10 gezeigt ist. In Figur 7 ist schematisch die Anordnung im eingefahrenen Zustand und in Figur 8 im ausgefahrenen Zustand dargestellt.

Für eine geführte und in Hoch- und Längsrichtung abgestützte Auschubbewegung des Hubdachausschubs 6 ist sowohl innen im heckseitigen als auch im frontseitigen Hubdach-Deckenbereich jeweils in Querrichtung eine Ausschub-Führungsschiene 44a, 44b als Profilschiene angeordnet. Im Profil der beiden Ausschub-Führungsschienen 44a, 44b ist je ein Rollwagenelement mittels Rollen (verschiebbar) 46a, 46b, 46c gehalten, wobei je eines dieser Rollwagenelemente 45a, 45b mit dem Hubdachausschub 6 an dessen jeweiligen oberen inneren Eckgereich verbunden ist. In Figur 13 ist ein solches Rollwangenelement 45a mit drei Rollen 46a, 46b, 46c gezeigt, welche in ein Profil eingreifen, wobei die Rollen 46a, 46b eine Führung und Abstützung in Hochrichtung und die Rolle 46c gegebenenfalls mit weiter ähnlich angeordneten Rollen eine Abstützung in Längsrichtung bewirken.

Zur entlastenden Abstützung des Hubdachausschubs 6 nach unten und für eine Zentrierung des Hubdachausschubs 6 bezüglich des Unterteilausschubs 4 sind jeweils im heckseitigen und frontseitigen unteren, äußeren Eckbereich des Hubdachausschubs 6 weitere Rollenpaare 47a, 47b mit Achsen in Querrichtung und mit Achsen in Längsrichtung angeordnet, die sich an oberen Querrandbereichen des Unterteilausschubs 4 abstützen und abrollen wobei wieder in Figur 7 der eingeschobene Zustand und in Figur 8 der ausgeschobene Zustand ersichtlich ist. Es können auch noch weitere Abstütz- und Führungsvorrichtungen gegebenenfalls in Verbindung mit motorisch und/oder von Hand betätigbaren Stelleinheiten und/oder bewegungsübertragenden Mitnehmern für untereinander gekoppelte Bewegungen angebracht werden.

Eine vorteilhafte und zweckmäßige Inneneinrichtung des Wohnanhängers in Verbindung mit den vier ineinander und auseinander verschiebbaren Kastenelementen ist an der Innenseite der nicht verschiebbaren Unterteil-Seitenwand 14 neben der unteren Tür 29 eine Küchenzeile 48 mit einer Spüle und/oder mit einem Herd und/oder mit einer Geschirrablage, etc. angeordnet (siehe Figur 3). Dazu quer gegenüberliegend im ausschiebbaren Unterteilausschub 4 ist ein Schubladensystem 49 mit in Querrichtung nach innen ausziehbaren Schubelementen angeordnet, wobei die Schubladensystemrückwand an der Unterteilausschub-Seitenwand 18 liegt.

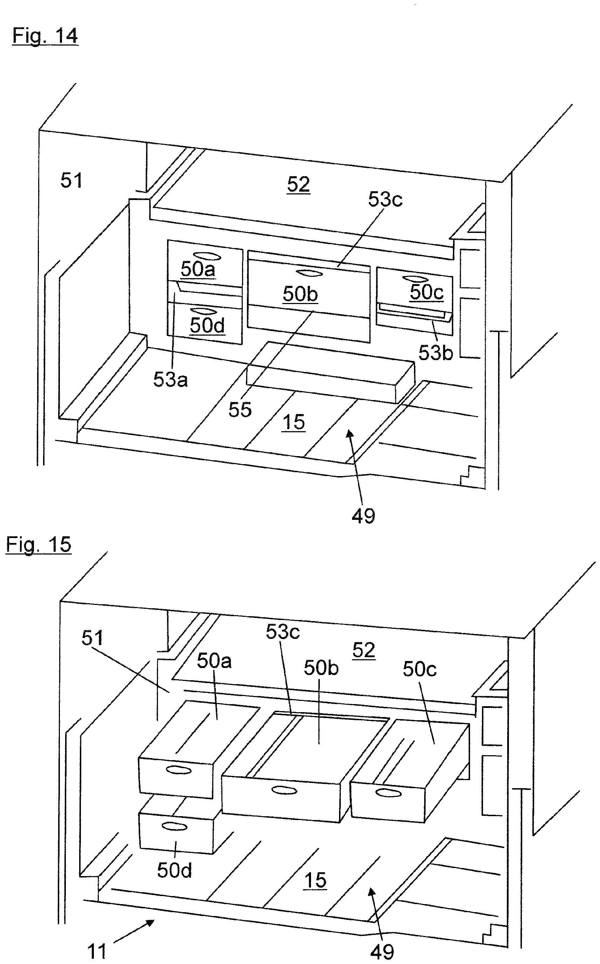

Eine vorteilhafte Ausgestaltung des Schubladensystems 49 ist in den Figuren 14 bis 17 dargestellt:
Das Schubladensystem 49 enthält vier übliche Schubläden 50a, 50b, 50c, 50d, die teils nebeneinander und teils übereinander angeordnet sind. Figur 14 zeigt den Zustand mit eingeschobenen Schubläden 50a bis 50d und Figur 15 den Zustand mit ausgeschobenen Schubläden 50a bis 50d.

Auf der Deckplatte des Kastens 51, der die Schubläden 50a bis 50d aufnimmt, liegt eine Polsterauflage 52, durch die eine Liegefläche für ein bis zwei Personen ausgebildet ist.

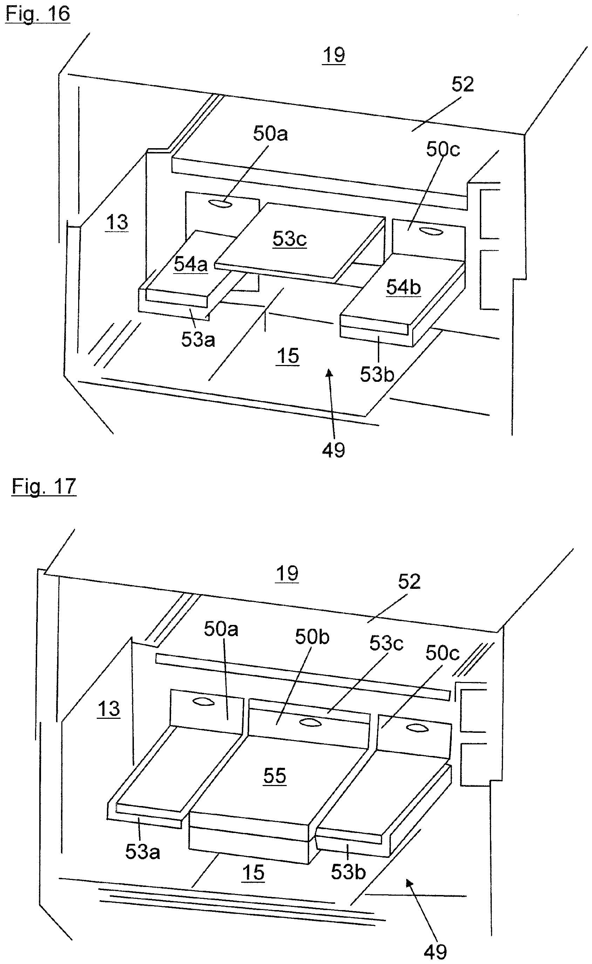

In Figur 16 ist mit den Ausschüben 53a, 53b, 53c eine Sitzgruppe für zwei Personen herstellbar. Dazu sind unter den Schubläden 50a, 50c jeweils plattenförmige Sitzausschübe 53a und 53b mit Polsterauflagen 54a und 54b angebracht. Oberhalb der mittleren Schublade 50b ist ein plattenförmiger Tischauszug 53c angebracht, der zur Komplettierung einer Sitzgruppe für zwei Personen ausziehbar ist.

Beim eingeschobenem Tischauszug 53c und ausgeschobenen Sitzausschüben 53a und 53b kann unterhalb der Schublade 50b ein Bettausschub 55 mit einer Polsterauflage zwischen den Sitzausschüben ausgeschoben werden, wodurch ein weiterer Liegeplatz geschaffen werden kann, wie in Figur 17 dargestellt.

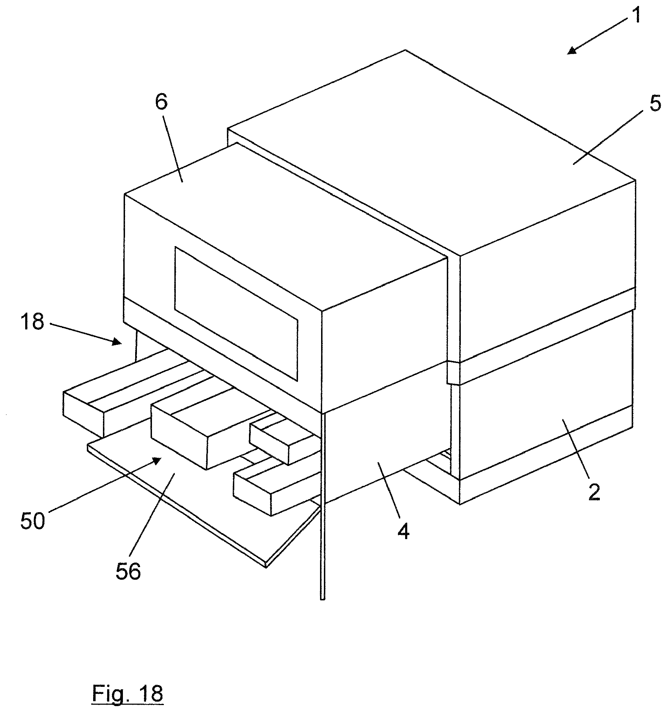

In Figur 18 ist eine Ausführungsform eines Wohnanhängers 1 mit Wohnkabine in einer Offenstellung gezeigt mit angehobenem Hubdach 5 und ausgeschobenem Unterteilausschub 4 und ausgeschobenem Hubdachausschub 6, wobei die Unterteilausschub-Seitenwand 18 frei zugänglich ist. Bei dieser Ausführungsform ist die Unterteilausschub-Seitenwand 18 insgesamt als nach unten aufklappbare Seitenwand-Klappe 56 ausgebildet. Dadurch sind bei offener Seitenwandklappe 56 auch die Rückseiten der Schubladen 50 des Schubladensystems 49 zugänglich, so dass diese wie dargestellt auch nach außen, insbesondere für eine bequeme Beladung ausschiebbar sind.

### Bezugszeichenliste

- 1: Wohnanhänger
- 2: Unterteil
- 3: Fahrgestell
- 4: Unterteilausschub
- 5: Hubdach
- 6: Hubdachausschub
- 7: Rahmen
- 8: Räder
- 9: Deichsel
- 10: Anhängekupplung
- 11: Unterteil-Bodenwand
- 12: Unterteil-Frontwand
- 13: Unterteil-Heckwand
- 14: Unterteil-Seitenwand
- 15: Unterteilausschub-Bodenwand
- 16: Unterteilausschub-Frontwand
- 17: Unterteilausschub-Heckwand
- 18: Unterteilausschub-Seitenwand
- 19: Hubdach-Deckenwand
- 20: Hubdach-Frontwand
- 21: Hubdach-Heckwand
- 22: Hubdach-Seitenwand
- 23: unterer Randbereich
- 24: Hubdachausschub-Deckenwand
- 25: Hubdachausschub-Frontwand
- 26: Hubdachausschub-Heckwand
- 27: Hubdachausschub-Seitenwand
- 28: Hubdachausschub-Rand
- 29: untere Tür
- 30: Klappe
- 31: Fenster
- 32: Fenster
- 33: Rollenelemente
- 34: Rolle
- 35: Rolle
- 36a, 36b, 36c, 36d: Vertikal-Führungsschiene
- 37a, 37b, 37c, 37d: Linear-Hubzylinder
- 38a, 38b: Unterteilschienenpaar
- 39a, 39b: Unterteil-Festschiene
- 40a, 40b: Unterteil-Schubschiene
- 41: Rolle
- 42a, 42b: Rolle
- 43a, 43b: Querschienen
- 44a, 44b: Ausschub-Führungsschiene
- 45a, 45b: Rollwagenelement
- 46a, 46b, 46c: Rollen
- 47a, 47b: Rollenpaare
- 48: Küchenzeile
- 49: Schubladensystem
- 50a, 50b, 50c, 50d: Schublade
- 51: Kasten
- 52: Polsterauflage
- 53a, 53b, 53c: Ausschübe (Sitze und Tisch=
- 54a, 54b: Polsterauflagen
- 55: Bettausschub
- 56: Seitenwandklappe

## Patentansprüche

1. Wohnkabine für Fahrzeuge mit verschiebbaren Kastenelementen zur Wohnraumvergrößerung **dadurch gekennzeichnet,**
**dass** vier teleskopartig in einer fahrbereiten Geschlossenstellung geschachtelt ineinander geschobene und in eine Offenstellung zur Wohnraumvergrößerung ausschiebbare Kastenelemente vorgesehen sind,
**dass** ein erstes Kastenelement als oben und einseitig offenes Unterteil (2) des Wohnraums vorgesehen ist,
**dass** ein zweites Kastenelement als oben und einseitig nach innen zum Unterteil (2) hin offener Unterteil-Ausschub (4) vorgesehen ist, der in der Geschlossenstellung ausschiebbar in das Unterteil (2) eingeschoben ist,
**dass** ein drittes Kastenelement als unten und einseitig an der gleichen Seite wie das Unterteil (2) offenes, vertikal nach oben in eine Offenstellung verschiebbares Hubdach (5) vorgesehen ist, das in der abgesenkten Geschlossenstellung das Unterteil (2) übergreift, und
**dass** ein viertes Kastenelement als unten und einseitig nach innen zum Hubdach (5) hin offener Hubdachausschub (6) vorgesehen ist, der aus dem Hubdach (5), den Unterteil-Ausschub (4) überdeckend ausschiebbar ist, wobei der Hubdachausschub (6) in der ins Hubdach (5) eingeschobenen und mit dem Hubdach (5) abgesenkten Geschlossenstellung den Unterteil-Ausschub (4) übergreift.

2. Wohnkabine nach Anspruch 1, **dadurch gekennzeichnet, dass** das Unterteil (2) der Wohnkabine zur Ausbildung eines Wohnanhängers (1) auf einem Fahrgestell (3) montiert ist, welches einen Rahmen (7), seitliche Räder, vorzugsweise zwei axial gegenüberliegende Räder (8), und eine Deichsel (9) aufweist.

3. Wohnkabine nach Anspruch 1, **dadurch gekennzeichnet, dass** die Wohnkabine auf der Ladefläche eines Pickup-Fahrzeugs angeordnet, vorzugsweise lösbar montiert ist.

4. Wohnkabine nach einem der Ansprüche 1 bis 3, **dadurch gekennzeichnet,**
**dass** das Unterteil (2) als erstes Kastenelement eine Unterteil-Bodenwand (11), eine Unterteil-Frontwand (12), eine Unterteil-Heckwand (13) und eine Unterteil-Seitenwand (14) aufweist, wobei bevorzugt vorgesehen ist, dass die Unterteil-Frontwand (12), die Unterteil-Heckwand (13) und die Unterteil-Seitenwand (14) jeweils die gleiche Höhe kleiner als eine Stehhöhe aufweisen,
**dass** der Unterteil-Ausschub (4) als zweites Kastenelement eine Unterteilausschub-Bodenwand (15), eine Unterteilausschub-Frontwand (16), eine Unterteilausschub-Heckwand (17) und eine Unterteilausschub-Seitenwand (18) aufweist, wobei die Quererstreckung des UnterteilAusschubs (4) größer als die Ausschubstrecke bis zu einer vorgegebenen begrenzten Ausschubposition ist und die Unterteilausschub-Frontwand (16) und die Unterteilausschub-Heckwand (17) innerhalb und parallel zu zugeordneten Wandbereichen des Unterteils (2) verschiebbar liegen,
**dass** das Hubdach (5) als drittes Kastenelement eine Hubdach-Deckenwand (19), eine Hubdach-Frontwand (20), eine Hubdach-Heckwand (21) und eine Hubdach-Seitenwand (22) aufweist, wobei die Hubdach-Frontwand (20), die Hubdach-Heckwand (21) und die Hubdach-Seitenwand (22) in einer abgesenkten Tiefposition des Hubdachs (5) die zugeordneten Unterteilwände (12, 13, 14) flächig übergreifen und abdecken und diese in einer angehobenen Hochposition mit einem unteren Randbereich (23) übergreifen,
**dass** der Hubdachausschub (6) als viertes Kastenelement eine Hubdachausschub-Deckenwand (24) eine Hubdachausschub-Frontwand (25), eine Hubdachausschub-Heckwand (26) und eine Hubdachausschub-Seitenwand (27) aufweist, wobei die Hubdachausschub-Frontwand (25), die Hubdachausschub-Heckwand (26) und die Hubdachausschub-Seitenwand (27) in einer abgesenkten Tiefposition des Hubdachs (5) die zugeordneten Unterteilausschubwände (16, 17, 18) flächig übergreifen und abdecken und in einer angehobenen Hochposition mit einem unteren Hubdachausschub-Rand (28) übergreifen, vorzugsweise dergestalt, dass in einer abgesenkten Tiefposition mit eingeschobenen Ausschüben (4, 6) im Frontbereich und Heckbereich vier Wandteile und in den Seitenbereichen sowie im Boden- und Deckenbereich jeweils zwei Wandteile übereinander liegen.

5. Wohnkabine nach einem der Ansprüche 1 bis 4, **dadurch gekennzeichnet, dass** die Höhe des Unterteils (2) und die Höhe des Hubdachs (5) ohne die randseitige Überdeckung in der Hochposition in etwa jeweils der Hälfte der gesamten Wohnraumhöhe in der angehobenen Hochposition entsprechen.

6. Wohnkabine nach einem der Ansprüche 1 bis 5, **dadurch gekennzeichnet, dass** der Unterteilausschub (14) und der Hubdachausschub (6) in Fahrtrichtung rechts oder links an der Wohnkabine angeordnet sind, vorzugsweise abhängig von der Anordnung eines Türausstiegs zu einem Gehsteig

7. Wohnkabine nach einem der Ansprüche 1 bis 6, **dadurch gekennzeichnet, dass** eine Tür der Wohnkabine zweiteilig ausgebildet ist, wobei bevorzugt in der Unterteil-Seitenwand (14) eine untere Tür (29) oder eine nach unten aufschwenkbare Klappe und in der Hubdach-Seitenwand (22) darüber eine obere Tür oder eine nach oben aufschwenkbare Klappe (30) angeordnet sind.

8. Wohnkabine nach einem der Ansprüche 1 bis 7, **dadurch gekennzeichnet, dass** zumindest in der Hubdach-Seitenwand (22) und/oder in der Hubdachausschub-Seitenwand (27) wenigstens ein Fenster (31, 32) angeordnet ist.

9. Wohnkabine nach einem der Ansprüche 1 bis 8, **dadurch gekennzeichnet, dass** an den gegeneinander verschiebbaren Kastenelementen (2, 4, 5, 6) für deren laterale und/oder vertikale Verschiebungen Führungselemente angeordnet sind.

10. Wohnkabine nach Anspruch 9, **dadurch gekennzeichnet, dass** zwischen den gegeneinander verschiebbaren vier Kastenelementen (2, 4, 5, 6) bewegungsübertragende Vorrichtungen als motorisch und/oder von Hand betätigbare Stelleinheiten und/oder bewegungsübertragende Mitnehmer für untereinander gekoppelte Bewegungen angeordnet sind.

11. Wohnkabine nach Anspruch 9 oder 10, **dadurch gekennzeichnet,**
**dass** das Unterteil (2) ein Rahmengestell aufweist, in dessen Eckbereichen Vertikal-Führungselemente, vorzugsweise VertikalFührungsschienen (36a, 36b, 36c, 36d) vorgesehen sind,
**dass** am Hubdach (5) in dessen unteren Eckbereichen Gegen-Führungselemente, vorzugsweise Rollenelemente (33) angeordnet sind, und
**dass** für eine Hub- und Absenkbewegung zwischen einer Unterteil-Bodenwand (11) und einer Hubdach-Deckenwand (19) in den Eckbereichen je ein elektrisch und/oder hydraulisch und/oder pneumatisch steuerbar angetriebenes Linear-Hubelement, vorzugsweise ein Linear-Hubzylinder (37a, 37b, 37c, 37d) angeordnet ist.

12. Wohnkabine nach einem der Ansprüche 9 bis 11, **dadurch gekennzeichnet,**
**dass** Führungselemente für eine geführte und in Hoch- und Längsrichtung abgestützte Ausschubbewegung des Unterteilausschubs (4) vorgesehen sind, wobei vorzugsweise sowohl im heckseitigen als auch frontseitigen Unterteil-Bodenbereich jeweils ein teleskopierbares Unterteil-Schienenpaar (38a, 38b) angebracht ist, das jeweils aus einer Unterteil-Festschiene (39a, 39b), die als Profilschiene jeweils fest im Bereich der Unterteil-Bodenwand (11) verbunden ist und aus einer Unterteil-Schubschiene (40a, 40b) besteht, die in der zugeordneten Unterteil-Festschiene (39a, 39b) in Ausschubrichtung bis zu einer Ausschubbegrenzung verschiebbar ist, und
**dass** gegebenenfalls zur zusätzlichen entlastenden Abstützung des Unterteilausschubs (4) unter der Unterteilausschub-Bodenwand (15) Rollen (42) angebracht sind, die auf der Unterteil-Bodenwand (11) beim Ein- und Ausschub abrollen.

13. Wohnkabine nach einem der Ansprüche 9 bis 12, **dadurch gekennzeichnet,**
**dass** Führungselemente für eine geführte und in Hoch- und Längsrichtung abgestützte Ausschubbewegung des Hubdachausschubs (6) vorgesehen sind, wobei vorzugsweise sowohl innen im heckseitigen als auch im frontseitigen Hubdach-Deckenbereich je eine Ausschub-Führungsschiene (44a, 44b) als Profilschiene angeordnet ist,
**dass** im Profil der beiden Ausschub-Führungsschienen (44a, 44b) je ein Rollwagenelement (45a, 45b) mit wenigstens zwei in Querrichtung versetzten Rollen (46a, 46b, 46c) verschiebbar gehalten ist, wobei je eines dieser Rollwagenelemente (45a, 45b) mit dem Hubdachausschub (6) an dessen jeweiligem oberen inneren Eckbereich verbunden ist, und
**dass** zur entlastenden Abstützung das Hubdachausschubs (6) nach unten und für eine Zentrierung des Hubdachausschubs (6) bezüglich des Unterteilausschubs (4) jeweils im heckseitigen und frontseitigen unteren, äußeren Eckbereich des Hubdachausschubs (6) Rollenpaare (47a, 47b) mit Achsen in Querrichtung und mit Achsen in Längsrichtung angeordnet sind, die sich an oberen Querrandbereichen des Unterteilausschubs (4) abstützen und abrollen.

14. Wohnkabine nach einem der Ansprüche 1 bis 13, **dadurch gekennzeichnet,**
**dass** an der Innenseite der nicht verschiebbaren Unterteil-Seitenwand (14), gegebenenfalls neben einem Türbereich, eine Küchenzeile (48) mit einer Spüle und/oder mit einem Herd und/oder mit einer Geschirrablage, etc. angeordnet ist, und
**dass** dazu gegenüberliegend im ausschiebbaren Unterteilausschub (4) ein Schubladensystem (49) mit in Querrichtung nach innen ausziehbaren Schubelementen (50, 53, 55) angeordnet ist, wobei die Schubladensystem-Rückwand an der Unterteilausschub-Seitenwand (18) liegt.

15. Wohnkabine nach Anspruch 14, **dadurch gekennzeichnet,**
**dass** im mittleren oberen Bereich des Schubladensystems (49) ein Tischplattenausschub (53c) und beidseitig daneben, tiefer liegende Sitzausschübe (53a, 53b) für eine Sitzgruppe angeordnet sind, und
**dass** in gleicher Höhe der Sitzausschübe (53a, 53b) dazwischenliegend ein Bettausschub (55) angeordnet ist, wobei bei einem eingeschobenen Tischplattenausschub (53c) die ausgeschobenen Sitzausschübe (53a, 53b) und der ausgeschobene Bettausschub (55) mit Polsterauflagen eine Liegefläche als Bett bilden und/oder
**dass** auf einer oberen Abdeckwand des Schubladensystems (49) eine Polsterauflage (52) zur Ausbildung einer Liegefläche als Bett angeordnet ist.

16. Wohnkabine nach Anspruch 14 oder Anspruch 15, **dadurch gekennzeichnet, dass** zumindest ein Teilbereich der Unterteilausschub-Seitenwand (18) als nach außen sowie nach oben oder nach unten aufklappbare Seitenwand-Klappe ausgebildet ist und zumindest ein Teil, vorzugsweise alle Schubelemente (50, 53, 55) des Schubladensystems (49) bei angehobenem Hubdach (5) und aufgeklappter Seitenwand-Klappe auch nach außen ausziehbar sind.
